# EUROPÄISCHE PATENTSCHRIFT

(11) **EP 0 903 500 B1**
(45) Veröffentlichungstag und Bekanntmachung des Hinweises auf die Patenterteilung: **14.03.2001**
(21) Anmeldenummer: 98890263.1
(22) Anmeldetag: 11.09.1998
(51) Int. Cl.: F04D 29/04, F04D 13/06, H02K 5/124

(54) **Elektrisch betriebene Kühlmittelpumpe**
Electrically driven coolant pump
Pompe de refroidissement à entraînement électrique

(30) Priorität: 19.09.1997 AT 158797
(43) Veröffentlichungstag der Anmeldung: 24.03.1999
(73) Patentinhaber: TCG UNITECH Aktiengesellschaft, 4560 Kirchdorf/Krems (AT)
(72) Erfinder: Strauch, Joachim, Dipl.-Ing., 4400 Steyr (AT); Pastleitner, Harald, 4400 Steyr (AT); Buha, Gerald, 4400 Steyr (AT)
(74) Vertreter: Babeluk, Michael, Dipl.-Ing. Mag.

(56) Entgegenhaltungen:
- WO-A-96/09476
- DE-A- 1 814 929
- FR-A- 1 587 898
- FR-A- 2 095 829
- FR-A- 2 127 607
- FR-A- 2 608 228
- US-A- 2 500 400
- US-A- 3 719 436

## Beschreibung

Die Erfindung betrifft eine elektrisch betriebene Kühlmittelpumpe mit einem von einem Stator des Elektromotors umgebenen Rotor mit einer hohl ausgeführten Rotorwelle, durch welchen die Flüssigkeitszufuhr zum Pumpenlaufrad erfolgt, wobei der Stator in einem Statorraum des Motorgehäuses angeordnet und die Rotorwelle im Motorgehäuse drehbar gelagert ist, wobei die Lagerung der Rotorwelle über Wälzlager erfolgt.

Die US 5 288 215 A zeigt eine elektrisch betriebe Pumpe, deren hohl ausgeführte Rotorwelle über Wälzlager gelagert ist. Die Wälzlager sind über separate Gleitringdichtungen von den mit der zu fördernden Flüssigkeit gefüllten Räumen getrennt. Zur Kühlung des Elektromotors der Pumpe ist ein interner Ölkreislauf vorgesehen, wobei zur Ölförderung eigene, mit der Rotorwelle verbundene Förderschaufeln an beiden Enden des Statorraumes angeordnet sind.

Es sind Kühlmittelpumpen bekannt, bei denen die Rotorwelle über Gleitlager im Motorengehäuse des Elektromotors gelagert ist. Zwischen dem Stator und dem Rotor ist ein mit dem Rotor verbundenes Spaltrohr angeordnet, welches über O-Ringe am Motorgehäuse anliegt. Dieses Spaltrohr dient zum Trennen des Raumes zwischen Stator und Rotor, da der Statorraum trocken bleiben muß, aber der Rotorraum mit Förderflüssigkeit gefüllt ist. Um den magnetischen Fluß nicht zu hindern, ist das Spaltrohr aus Kunststoff ausgeführt. Diese Anordnung hat allerdings den Nachteil, daß konstruktiv bedingt, ein relativ großer Spalt zwischen Rotor und Stator entsteht, und somit vergleichsweise große Spaltverluste auftreten. Wird die Wandstärke des Spaltrohres dagegen zu dünn ausgeführt, kommt es infolge erhöhten Verschleißes, insbesondere bei hoher thermischer Belastung, zu Undichtheiten zwischen dem Spaltrohr und der O-Ring-Dichtungen.

Weiters ist aus der FR 2 608 228 A eine Kühlmittelpumpe mit einer hohlen, über Gleitlager im Motorgehäuse gelagerten Rotorwelle bekannt, welche von einem Stator umgeben wird. Maßnahmen zur Abdichtung des Rotorraumes vom Statorraum sind keine vorgesehen. Bei einem gefluteten Statorraum müssen allerdings zusätzliche Maßnahmen vorgesehen sein, um die Statorwicklungen vom Kühlmittel zu isolieren, welche allerdings den Wirkungsgrad nachteilig beeinflussen.

Die Lagerung über Gleitlager hat weiters den Nachteil, daß bei langsamer Pumpendrehzahl in den Gleitlagern Mischreibung auftritt und diese somit einem erhöhten Verschleiß ausgesetzt sind.

Die US 5 407 331 A zeigt eine motorbetriebene Pumpe für Raketenkraftstoff, insbesondere für Flüssigsauerstoff, wobei die Rotorwelle über Wälzlager gelagert ist. Der Schrift ist keine Anregung zur Verwendung flüssigkeitsdichter Wälzlager zu entnehmen.

Die US 3 719 436 A zeigt eine elektromotorisch angetriebene Axialpumpe mit einer hohl ausgeführten Rotorwelle, welche über Wälzlager in einem Gehäuse gelagert ist. Die Abdichtung der Wälzlager erfolgt über separate Dichtringe. Weiters ist zwischen dem Rotorraum und dem Statorraum ein Spaltrohr vorgesehen.

Auch die US 5 273 404 A zeigt elektrisch betriebene Kühlmittelpumpen mit axialen Laufrädem, wobei der Flüssigkeitstransport durch die hohl ausgeführte Rotorwelle erfolgt, welche über Wälzlager in einem Gehäuse gelagert ist. Maßnahmen zur Abdichtung der Wälzlager gegenüber der Förderflüssigkeit sind dieser Schrift keine zu entnehmen.

Die US 4 413 958 A zeigt eine elektrisch betriebene Pumpenanordnung, wobei die hohl ausgeführte Rotorwelle über Wälzlager in einem Gehäuse gelagert ist. Auch dieser Veröffentlichung ist kein Hinweis zu entnehmen, daß die Wälzlager flüssigkeitsdicht ausgebildet sind.

Aufgabe der Erfindung ist es, diese Nachteile zu vermeiden und bei einer Kühlmittelpumpe der eingangs genannten Art den Wirkungsgrad zu verbessern und einen verschleißarmen Betrieb bei jeder Betriebsdrehzahl zu ermöglichen.

Erfindungsgemäß wird dies dadurch erreicht, daß zumindest ein Wälzlager als flüssigkeitsdichtes Wälzlager ausgebildet ist und Dichtelemente in den Wälzlagerkäfig integriert sind, und daß der flüssigkeitsdicht von der Förderflüssigkeit getrennte Statorraum trocken ausgeführt ist. Die Wälzlager erlauben einen verschleißarmen Betrieb bei jeder Pumpendrehzahl und ermöglichen eine sehr kompakte Bauweise der Elektromotor-Pumpeneinheit. Die Funktion der Abdichtung zwischen den Endbereichen der Rotorwelle und dem Statorraum wird durch die flüssigkeitsdichten Wälzlager übernommen. Dadurch entfallen weitere Abdichtmittel, wie ein Spaltrohr oder ähnliches, und der Spalt zwischen Stator und Rotor kann so klein wie möglich ausgeführt sein, was sich vorteilhaft auf den Wirkungsgrad auswirkt.

Selbstdichtend ausgeführte Wälzlager, beispielsweise mit Dichtscheiben, sind seit langem bekannt. Derartige Lager mit beidseitig angeordneten Dichtscheiben werden üblicherweise vom Hersteller mit einer Fettfüllung versehen und gelten als wartungsfreie Lager. Die Dichtscheiben dienen dabei dazu, einerseits ein Austreten der Fettfüllung zu vermeiden und andererseits ein Eindringen von Fremdstoffen, Spritzwasser od. dgl. zu verhindern. Bisher wurde angenommen, daß speziell bei Pumpen eigene Dichtungsvorrichtungen notwendig sind, um eine zuverlässige Abdichtung des Statorraumes gegenüber mit unter Druck stehender Förderflüssigkeit gefüllten Spalträumen zu gewährleisten.

Überraschenderweise hat sich gezeigt, daß auf weitere Abdichtungsmaßnahmen verzichtet werden kann, wenn die Wälzlager selbst flüssigkeitsdicht ausgeführt sind. Durch den Wegfall von zusätzlichen Dichtungsmaßnahmen stehen dem Konstrukteur größere Freiräume bei der Auslegung und Konstruktion der Pumpe zur Verfügung, sodaß die Baugröße gegenüber bekannten vergleichbaren Pumpen wesentlich reduziert werden kann. Gleichzeitig werden Bauteile eingespart, wodurch eine äußerst kostengünstige Fertigung möglich ist. Der in äußerst einfacher Weise trocken ausgeführte Statorraum hat gegenüber Pumpen mit geflutetem Statorraum darüber hinaus den Vorteil, daß viel geringere Verluste in Kauf genommen werden müssen.

Insbesondere bei Kühlmittelpumpen mit hoher Drehzahl ist es vorteilhaft, wenn zumindest ein Wälzlager als Schrägkugellager ausgeführt ist. Gegebenenfalls können zwei Schrägkugellager in Tandemanordnung vorgesehen sein, um die Steifigkeit in axialer Richtung zu erhöhen. Es ist auch denkbar, ein oder zwei Schrägkugellager in Kombination mit ein- oder mehrreihigen Zylinderrollenlager einzusetzen.

Weiters ist es vorteilhaft, wenn der Elektromotor ein synchronlaufender Motor ist. Dies ermöglicht eine sehr gute Regelung der Drehzahl durch eine Leistungselektronik, wodurch insbesondere in der Anlaufphase ein relativ hohes Drehmoment aufgebracht werden kann. Dadurch kann ein infolge längeren Stillstandes der Pumpe festgefressenes Laufrad wieder ohne großen Aufwand gängig gemacht werden.

Die Erfindung wird anhand der Figuren näher erläutert. Es zeigen:
Fig. 1 einen Längsschnitt durch die erfindungsgemäße Kühlmittelpumpe,
Fig. 2 und 3 Lagerausführungsvarianten im Detail.

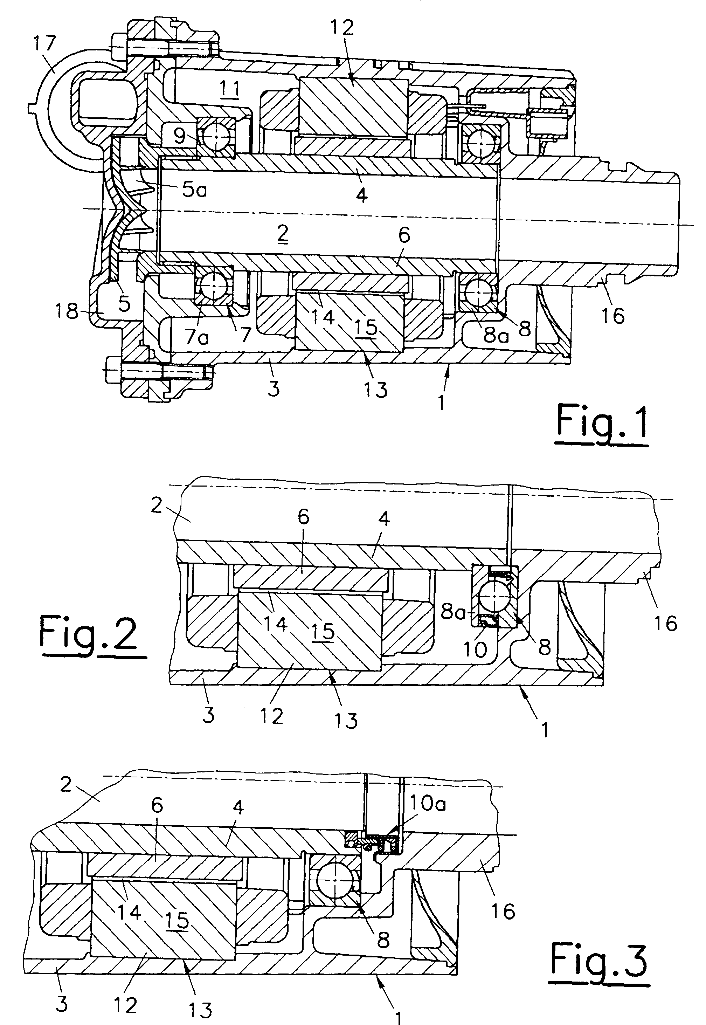

Die Fig. 1 zeigt einen Längsschnitt durch die Kühlmittelpumpe 1 mit einem Rotor 2 und einem Motorgehäuse 3. Der Rotor 2 besteht aus der hohl ausgeführten Rotorwelle 4, dem mit der Rotorwelle 4 fest verbunden Laufrad 5 und den auf der Rotorwelle 4 angebrachten Rotorblechen 6. Die Rotorwelle 4 ist über als Kugellager ausgebildete Wälzlager 7, 8 an beiden Enden im Motorgehäuse 3 gelagert. Die Wälzlagerkäfige 7a, 8a der Wälzlager 7, 8 sind flüssigkeitsdicht ausgeführt und weisen Dichtelemente 9, 10 auf, welche den Statorraum 11, in welchem der Stator 12 des Elektromotors 13 angeordnet ist, von den flüssigkeitsgefüllten, an die Wälzlager 7, 8 grenzenden Räume trennen. Dadurch wird einerseits der Kontakt der Wälzelemente der Wälzlager 7 und 8 mit der Förderflüssigkeit verhindert und andererseits gewährleistet, daß der Statorraum 11 trocken bleibt. Die Wälzlager 7, 8 erlauben eine sehr kompakte Bauweise der Kühlmittelpumpe 1 und machen eine optimale Lagerung bei jeder Drehzahl im Pumpenkennfeld möglich. Dadurch, daß die Wälzlager 7, 8 flüssigkeitsdicht ausgeführt sind, entfallen zusätzliche Dichtelemente, so daß aufwendige Abdichtmaßnahmen zwischen dem Rotor 2 und dem Stator 12 entfallen können. Somit kann der Luftspalt 14 zwischen dem Rotorblech 6 und dem Statorblech 15 so klein wie möglich ausgeführt sein, wodurch die Luftspaltverluste minimiert werden können.

Die Förderflüssigkeit gelangt über den Stutzen 16 in die hohle Rotorwelle 4 zum Pumpenlaufrad 5 und wird nach Passieren der Laufradschaufeln 5a und der Pumpenspirale 18 dem Kühlmittelaustritt 17 zugeführt.

Abgesehen von der in der Fig. 1 gezeigten Ausführungsform können die Wälzlager auch - wie in Fig. 2 gezeigt - als flüssigkeitsdichte Schrägkugellager, gegebenenfalls auch als Tandemschrägkugellager ausgeführt sein, wodurch eine hohe Drehzahl möglich ist. Weiters ist es denkbar, ein oder zwei Schrägkugellager in Kombination mit ein- oder mehrreihigen Zylinderrollenlager einzusetzen.

Alternativ zu Wälzlagern 7, 8 deren Wälzlagerkäfige 7a, 7b mit Dichtelementen 9, 10 versehen sind, können zur Abdichtung der Wälzlager 7, 8 gegenüber den flüssigkeitsgefüllten Räumen andere bekannte Wellendichtungen, beispielsweise axiale Gleitringdichtungen 10a, verwendet werden, wie Fig. 3 veranschaulicht.

Da die Rotorwelle 4 praktisch von außen nicht zugänglich ist, ist der Elektromotor 13 vorteilhafterweise als synchronlaufender Motor ausgebildet, welcher ein relativ hohes Anlaufinoment aufweist. Dadurch wird ermöglicht, daß ein nach längerem Stillstand festgefressener Rotor 2 wieder ohne äußeren Eingriff gängig gemacht werden kann.

## Patentansprüche

1. Elektrisch betriebene Kühlmittelpumpe (1) mit einem von einem Stator (12) des Elektromotors (13) umgebenen Rotor (2) mit einer hohl ausgeführten Rotorwelle (4), durch welchen die Flüssigkeitszufuhr zum Pumpenlaufrad (5) erfolgt, wobei der Stator (12) in einem Statorraum (11) des Motorgehäuses (3) angeordnet und die Rotorwelle (4) im Motorgehäuse (3) drehbar gelagert ist, wobei die Lagerung der Rotorwelle (4) über Wälzlager (7, 8) erfolgt, **dadurch gekennzeichnet**, daß zumindest ein Wälzlager (7, 8) als flüssigkeitsdichtes Wälzlager ausgebildet ist und Dichtelemente (9, 10) in den Wälzlagerkäfig (7a, 8a) integriert sind, und daß der flüssigkeitsdicht von der Förderflüssigkeit getrennte Statorraum (11) trocken ausgeführt ist.

2. Kühlmittelpumpe nach Anspruch 1, **dadurch gekennzeichnet,** daß zumindest eines der Wälzlager (7, 8) als Schrägkugellager ausgebildet ist.

3. Kühlmittelpumpe nach Anspruch 1 oder 2, **dadurch gekennzeichnet**, daß der Elektromotor (13) ein synchronlaufender Motor ist.

## Claims

1. An electrically operated coolant pump (1) with a rotor (2) which is encompassed by a stator (12) of the electromotor (13) and comprises a rotor shaft (4) with hollow design through which the liquid supply to the impeller (5) is made, with the stator (12) being arranged in a stator chamber (11) of the motor housing (3) and the rotor shaft (4) being rotationally held in the motor housing (3), with the bearing of the rotor shaft (4) being effected by way of roller bearings (7, 8), characterized in that at least one roller bearing (7, 8) is arranged as a leakproof roller bearing and sealing elements (9, 10) are integrated in the roller bearing cage (7a, 8a), and that the stator chamber (11) which is separated in a leakproof manner from the conveying liquid is provided with a dry design.

2. A coolant pump as claimed in claim 1, characterized in that at least one of the roller bearings (7, 8) is arranged as an angular contact roller bearing.

3. A coolant pump as claimed in claim 1 or 2, characterized in that the electromotor (13) is a synchronously running motor.

## Revendications

1. Pompe de circulation d'agent réfrigérant, à entraînement électrique, comportant, entouré par le stator (12) du moteur électrique (13), un rotor (2) équipé d'un arbre (4) creux à travers lequel le liquide de refroidissement est amené à la roue de pompe (5), le stator (12) étant logé dans une chambre (11) de boîtier de moteur (3) tandis que l'arbre de rotor (4) est monté par des roulements (7, 8) dans le boîtier de moteur (3),
caractérisée en ce qu'
au moins un des roulements (7, 8) est étanche aux liquides par la présence d'éléments d'étanchéité (9, 10) intégrés à sa cage (7a, 8a),
la chambre de stator (11), isolée du liquide par étanchéité, étant une chambre sèche.

2. Pompe de circulation selon la revendication 1,
caractérisé en ce qu'
au moins un des roulements (7, 8) est un roulement oblique à billes.

3. Pompe de circulation selon la revendication 1,
caractérisée en ce que
le moteur électrique (13) est un moteur synchrone.
